# FASCICULE DE BREVET EUROPEEN

(11) **EP 1 733 869 B1**
(45) Date de publication et mention de la délivrance du brevet: **05.03.2008**
(21) Numéro de dépôt: 06114932.4
(22) Date de dépôt: 02.06.2006
(51) Int. Cl.: B29D 30/10

(54) **Machine d'assemblage et de vulcanisation des pneumatiques perfectionnée**
Verbesserte Montage- und Vulkanisiermaschine für Luftreifen
Improved machine for assembling and vulcanizing tires

(30) Priorité: 17.06.2005 FR 0506245
(43) Date de publication de la demande: 20.12.2006
(73) Titulaire: Société de Technologie Michelin, 63000 Clermont-Ferrand (FR); Michelin Recherche et Technique, 1763 Granges-Paccot (CH)
(72) Inventeur: Cordaillat, Dominique, 69126 Brindas (FR); Dailliez, Olivier, 63400 Chamalières (FR); Beciu, Stéphane, 69520 Grigny (FR); Coissard, Didier, 63110 Beaumont (FR); Vaillant, Christian, Greenville, SC South Carolina 29615 (US)
(74) Mandataire: Lasson, Cédric Y. M.

(56) Documents cités:
- EP-A- 0 468 342
- EP-A- 0 776 756
- EP-A- 0 893 237
- EP-A- 1 481 791
- EP-A- 1 541 324
- EP-A- 1 541 325
- US-A- 6 143 110
- US-A1- 2002 153 083

## Description

L'invention concerne la fabrication de pneumatiques destinés à équiper les véhicules et plus particulièrement l'agencement d'une machine destinée à la fabrication desdits pneumatiques.

Il est connu de l'art antérieur tel que décrit dans le brevet EP 0 666 165 B1 et la demande de brevet EP 1 541 324 A2, un procédé et une machine de fabrication dans lesquels l'agencement des postes de fabrication est simplifié, et dans lesquels l'ensemble des dispositifs servant à réaliser les étapes d'assemblage et de vulcanisation est concentré sur un même châssis servant de plateforme unique destinée à recevoir les éléments mécaniques de la machine.

Ce procédé de fabrication utilise un noyau démontable rigide imposant en partie sa forme au pneumatique. Le noyau est formé de plusieurs éléments séparables les uns des autres et constituant, une fois assemblés, une surface de révolution stable utilisée pour la fabrication d'un pneumatique, depuis l'assemblage où il sert de surface de référence pour la pose des différents constituants, jusqu'à la vulcanisation où il constitue le moule de la partie interne du pneumatique. Lorsqu'il est assemblé, le noyau peut être saisi par chacune des faces de sa partie centrale, formant une jante, de manière à pouvoir être transféré d'un poste à un autre.

La première étape de fabrication consiste à assembler les éléments du noyau et à positionner ce dernier à un poste d'assemblage des composants du pneumatique. L'étape d'assemblage consiste à déposer successivement sur ledit noyau tous les constituants du pneumatique selon un ordre d'assemblage déterminé. L'ensemble est alors transféré vers un poste sur lequel les éléments de moulage externe viennent compléter le noyau, et introduit dans une enceinte de vulcanisation. Enfin à l'issue de ladite étape de vulcanisation le moule externe et le noyau sont séparés du pneumatique et les éléments du noyau sont refroidis et ré assemblés en vue du cycle suivant.

Les transferts du noyau d'un poste à l'autre sont assurés par des chariots circulant sur ledit châssis sur lequel sont fixés le poste d'assemblage, le poste de vulcanisation pouvant cuire simultanément un ou plusieurs pneumatiques, le poste de désassemblage et de réassemblage du noyau et le poste de refroidissement.

La très grande compacité des éléments de machine, alliée à une extrême rapidité des temps de cycles, permet de disposer d'un procédé performant, parfaitement adapté à la réalisation de certaines catégories de pneumatiques pneumatiques de petite dimension.

Le besoin de fabriquer des pneumatiques très complexes ou de grande dimension ne cesse de s'accroître afin de satisfaire l'équipement des véhicules modernes dont les exigences en terme de vitesse, de puissance et de sécurité va en augmentant. De plus, il est difficile de répondre à l'évolution des besoins du marché par une simple révision du dimensionnement des éléments de la machine telle que décrite dans le document cité en référence.

En particulier, l'augmentation du nombre de composants de nature différente et l'augmentation du diamètre des noyaux lié à l'accroissement du diamètre des pneumatiques aboutissait à une modification profonde des cycles machine, notamment au niveau du poste d'assemblage, susceptible de provoquer une perte sensible de productivité.

La présente invention a pour objet de proposer un agencement particulier des différents organes de la machine. Le noyau se déplace successivement d'un poste de fabrication à un autre de manière à y exécuter une étape de fabrication depuis l'assemblage des composants jusqu'à la vulcanisation. Cet agencement autorise une utilisation optimale des différents postes de manière à permettre la fabrication des pneumatiques de grande dimension ou très complexes, dans les meilleures conditions de productivité tout en conservant les avantages liés à la compacité et à la transportabilité. Ce réarrangement conduit, dans certains cas, à remettre en cause profondément l'agencement particulier décrit dans le brevet ci-dessus.

Selon un aspect de l'invention, les différents postes de la machine sont disposés de façon modulaire selon deux axes perpendiculaires.

Une première ligne de poste est orientée dans une direction horizontale de référence XX'. Les postes sont configurés de manière à recevoir le noyau avec son axe de rotation disposé en position horizontale.

Une deuxième ligne de postes est orientée dans une direction horizontale YY', perpendiculaire à la direction XX'. Les postes sont configurés de manière à recevoir le noyau avec son axe de rotation disposé en position verticale.

De manière préférentielle la première ligne de poste comprend des postes d'assemblage Les postes d'assemblages comportent des moyens pour saisir et entraîner en rotation le noyau autour d'un axe horizontal, et des moyens pour déposer les composants formant l'ébauche du pneumatique dans l'ordre et à la place requise par l'architecture du pneumatique.

Les postes d'assemblage sont composés d'un bâti supportant un axe rotatif comportant des moyens de saisie du noyau par une des faces de la jante du noyau, et montés en porte à faux sur ledit bâti. Ce type de montage permet de réaliser aisément les transferts du noyau depuis un moyen de transport assurant la saisie du noyau par une des faces de la jante, vers un des postes d'assemblage sur lequel le noyau est saisi par l'autre face de ladite jante.

Le nombre de poste de cette première ligne est déterminé par la complexité du pneumatique à assembler et par l'équilibre des temps de cycle que l'on souhaite conférer à la machine.

Cette première ligne comporte également un retourneur permettant d'une part de transférer un noyau d'un poste d'assemblage à un autre par translation dans la direction XX' en présentant le noyau avec son axe de rotation positionné horizontalement, et d'autre part de faire effectuer au noyau une rotation de 90° autour d'un axe horizontal yy', perpendiculaire à l'axe de rotation du noyau, de manière à le présenter en position pour en assurer le transfert vers la deuxième ligne de postes.

Une configuration comprenant deux postes d'assemblage s'avère particulièrement avantageuse. Dans ce cas particulier il est en effet possible de disposer les deux postes axialement en vis-à-vis l'un de l'autre. On entend par vis-à-vis le fait que leurs moyens de saisie se font face dans la direction XX'. Cette disposition particulière permet de simplifier le cycle de transfert et de saisie du noyau dans la mesure où, en position horizontale, l'axe du noyau est parallèle à la direction XX' de déplacement du retourneur.

Pour effectuer le transfert du noyau d'un poste d'assemblage à l'autre, le retourneur, après avoir saisi le noyau sur le premier moyen d'assemblage, fait effectuer à l'axe de rotation du noyau une rotation de 180° autour d'un axe yy' parallèle à la direction YY', et positionné dans cette configuration sensiblement perpendiculairement à la direction XX', de telle manière que les moyens de saisie du deuxième poste d'assemblage puissent saisir ledit noyau par la face disponible de la jante en maintenant l'axe de rotation dudit noyau horizontalement.

La machine, selon l'invention, comporte également une deuxième ligne de postes orientés selon une direction horizontale YY' sensiblement perpendiculaire à la direction XX'. Cette deuxième ligne comprend un poste de manipulation du noyau comprenant des moyens permettant de démanteler les éléments du noyau pour libérer le pneumatique après vulcanisation, et des moyens permettant de reconstituer les éléments du noyau avant son utilisation pour former l'ébauche de pneumatique suivante.

Le deuxième ensemble peut comporter, si la nécessité de la fabrication s'en fait ressentir, un poste de refroidissement disposé dans l'alignement du poste de manipulation du noyau selon l'axe YY'. Le refroidissement s'effectue de préférence par immersion d'une partie de la surface du noyau dans un bac d'eau réfrigérée de manière à réduire le temps de cycle de ce dernier poste.

Un ou plusieurs postes de vulcanisation sont placés dans le prolongement des postes précédents selon la direction YY'. Ces postes de vulcanisation supportent la partie extérieure du moule, qui comprend les deux coquilles permettant le moulage des flancs et de la zone basse, ainsi que la partie destinée à mouler la bande de roulement. Cet agencement du poste de vulcanisation permet ainsi de réduire considérablement le temps de cycle au poste de manipulation du noyau dés lors que les éléments externes du moule sont solidaires de la presse.

Enfin, un chariot de transfert permet, par translation selon la direction YY' de déplacer un noyau entre le retourneur, le poste de manipulation du noyau, éventuellement le poste de refroidissement, et le ou les postes de vulcanisation. Ce chariot de transfert comporte de préférence au moins un préhenseur apte à saisir et à maintenir le noyau par sa jante de telle manière que l'axe de rotation dudit noyau soit disposé verticalement. Les postes de manipulation, de refroidissement et de vulcanisation sont donc disposés pour recevoir le noyau selon un axe vertical.

Le changement d'axe entre les postes de la première ligne, et les postes situés sur la deuxième ligne est opéré par le retourneur qui effectue alors une rotation de 90° autour de l'axe yy' et qui peut être positionné, selon l'axe XX', de telle manière que l'axe de rotation du noyau soit aligné avec l'axe du moyen de saisie et de maintien disposé sur le chariot de transfert.

Il serait tout à fait possible de concevoir une machine dans laquelle le transfert et le traitement du noyau sur les postes de manipulation noyau, de refroidissement, et de vulcanisation se fassent en maintenant l'axe de rotation du noyau en position horizontale. Toutefois il convient d'observer que cette dernière disposition n'offre pas les meilleures possibilités en terme de compacité de la machine, et de maîtrise de la qualité de la cuisson et de la géométrie des pièces du noyau au moment de sa reconstitution ultérieure. C'est la raison pour laquelle la machine selon l'invention comporte deux lignes de postes configurés pour recevoir le noyau avec son axe de rotation orienté en position horizontale puis en position verticale.

Le mode d'agencement des différents postes, selon l'invention, offre une très grande modularité. Ainsi, il est possible de répartir les moyens assurant la pose des différents constituants de manière équilibrée entre les deux postes d'assemblage. De manière préférentielle, on choisira de placer sur le premier poste d'assemblage le moyen permettant de déposer les fils constituant le renforcement de la carcasse du pneumatique, et de placer le moyen pour déposer les fils constituant le renforcement du sommet de l'enveloppe sur le deuxième poste d'assemblage. Il est ainsi tout à fait possible, pour une architecture de pneumatique donnée, d'équilibrer le temps de cycle nécessaire à la réalisation des opérations d'assemblage sur chacun des postes en répartissant en conséquence les moyens de dépose des différents produits entre les deux postes d'assemblage.

De manière similaire, l'ajout d'un moyen de vulcanisation supplémentaire peut se faire sans qu'il soit nécessaire de modifier en profondeur l'architecture de la machine.

Les temps de cycle des postes de refroidissement et de manipulation du noyau sont réduits dans des proportions suffisantes pour permettre de faire fonctionner la machine avec un ou deux postes de vulcanisation.

Le nombre de noyaux qu'il est possible de monter simultanément sur la machine va dépendre du nombre de moyens de vulcanisation utilisés. Ainsi, dans une configuration avec un seul moyen de vulcanisation, quatre noyaux seront suffisants pour optimiser les temps de cycle ; Il est avantageux d'ajouter au moins un noyau supplémentaire lorsque l'on prévoit d'utiliser deux moyens de vulcanisation.

Dans ces conditions, par simple ajout ou retrait d'un moyen de vulcanisation, et en fonction du diamètre ou de la complexité de l'assemblage à réaliser, il est possible d'adapter la configuration de la machine, de manière à obtenir le meilleur rendement de l'installation. Lorsque plusieurs machines de ce type sont en opération sur un même site de fabrication, il est aisé de concevoir qu'une standardisation des moyens de vulcanisation permet de réaliser ces modifications avec un faible nombre de moyens de vulcanisation supplémentaires allouables aux machines affectées à la réalisation des dimensions ayant des cycles d'assemblages réduits par rapport aux cycles de vulcanisation.

Il est également possible, pour des raisons liées au transport, à l'installation et à la mise en oeuvre de la machine, de monter les différents postes sur des châssis commun autorisant la manipulation et le transfert simultané d'un ensemble de postes solidaires d'un même châssis. A cet effet, le premier ensemble de postes formé des deux postes d'assemblage et du retourneur peut aisément être monté sur un premier châssis. Un second ensemble comprenant le poste de manipulation noyau et éventuellement le poste de refroidissement est monté sur un deuxième châssis. Enfin chacun des postes de vulcanisation est monté sur son propre châssis.

Les étapes du procédé de fabrication sont supervisées par un calculateur qui pilote les séquences des mouvements des différents moyens évoqués ci-dessus. Ces moyens de pilotage et les moyens de contrôle des organes de la machine peuvent aussi etre avantageusement placés sur le chassis supportant les postes.

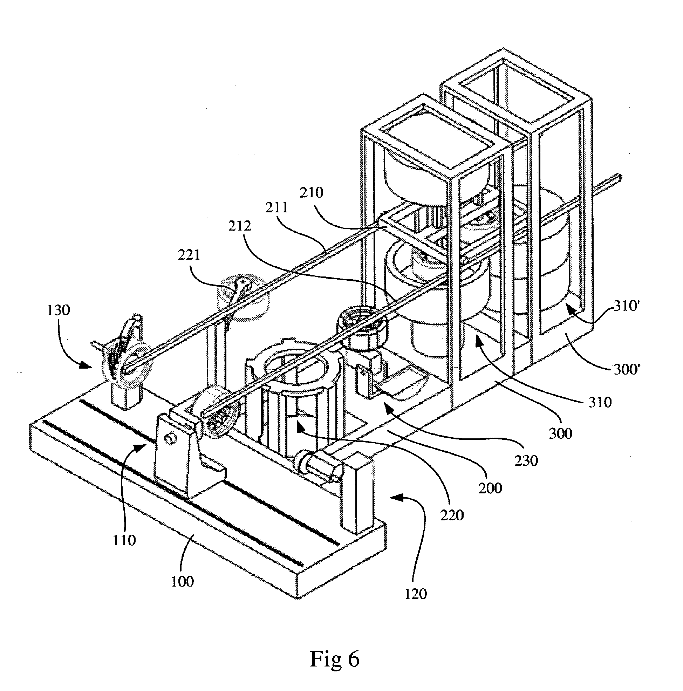

Les figures 1 à 6 servent de support et d'illustration à la description qui va suivre, en se basant sur un exemple de réalisation de machine conforme à l'invention, et dans lesquelles
- la figure 1 représente une vue en perspective simplifiée d'une machine conforme à l'invention
- la figure 2 représente une vue de dessus schématique de la machine,
- la figure 3 représente une vue de coté schématisée de la machine,
- les figures 4 et 5 représentent des vues de détail schématisées du poste de refroidissement,
- la figure 6 représente une vue en perspective schématisée d'une machine conforme à l'invention équipée de deux moyens de vulcanisation,
- la figure 7 représente une vue de dessus de la machine illustrée sur la figure 6.

Les repères numériques portés sur les figures sont identiques d'une figure à l'autre et permettent de se référer simultanément à plusieurs figures pour avoir une description claire de l'emplacement relatif des différents postes ou organes de la machine.

Les moyens non nécessaires à la compréhension de l'invention ne sont pas tous représentés sur les figures pour en faciliter la lecture en évitant des surcharges inutiles. Il en est ainsi des moyens affectés à l'application des mélanges de caoutchouc sur un noyau qui sont décrits à titre non limitatif dans les publications EP 0 264 600 ou EP 0 400 496. De même les moyens permettant de déposer les fils (non représentés) destinés au renforcement carcasse ou au renforcement du sommet sont décrits dans les publications EP 0 243 851, EP 0 248 301, EP 0 353 511, EP 0 519 294, EP 0 519 295, EP 0 580 055 ou EP 0 582 215. Enfin, il est possible de se référer à la publication EP 1 075 928 pour obtenir, à titre non limitatif, la description détaillée d'un noyau rigide comportant une jante de solidarisation et dont l'utilisation est compatible avec la machine faisant l'objet de l'invention.

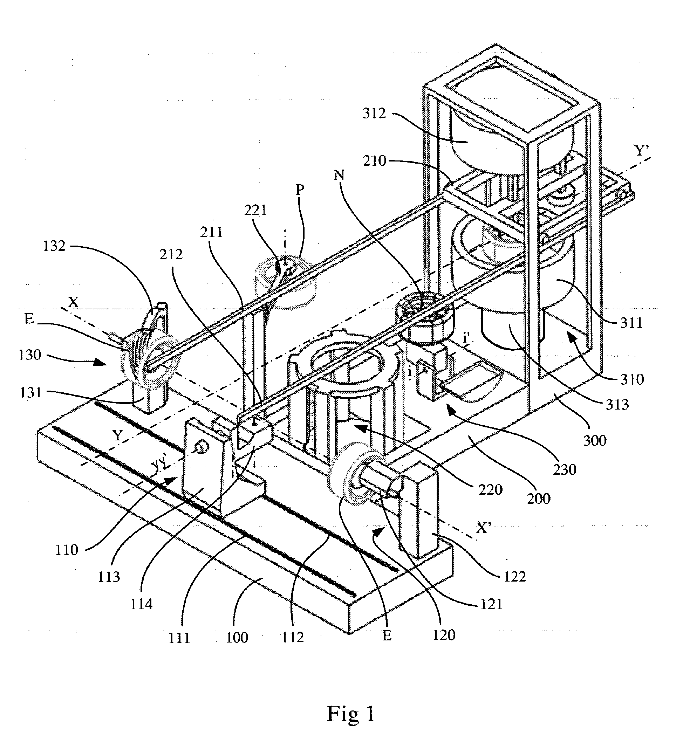

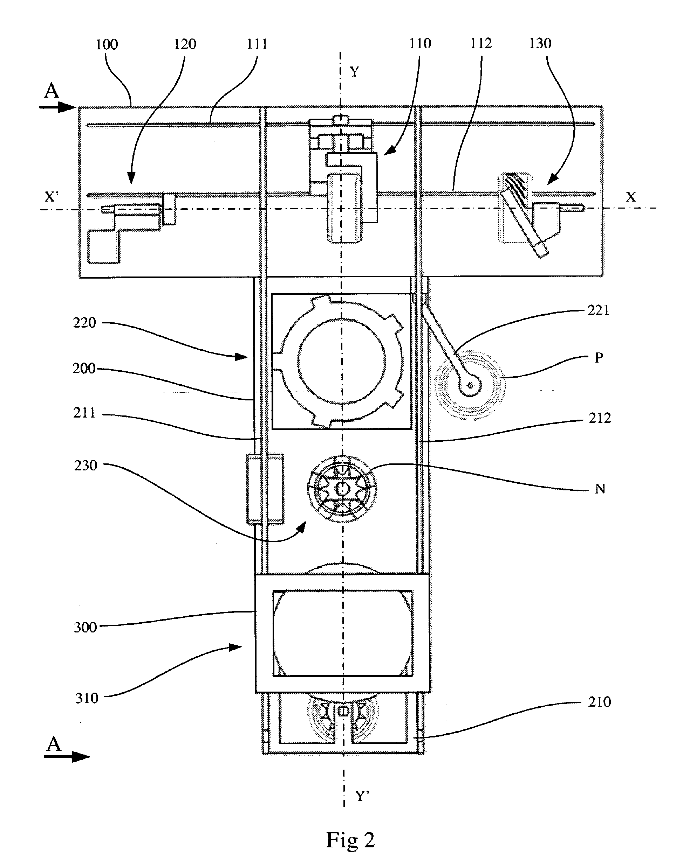

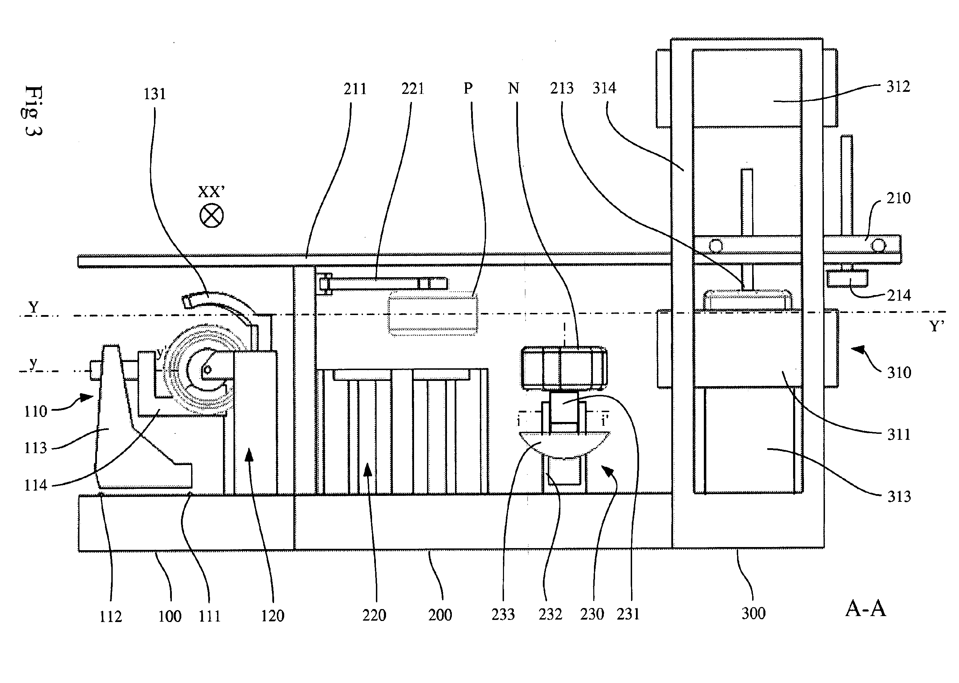

Les figures 1, 2 et 3 représentent, en vue perspective en vue de dessus ou en vue de coté, une machine conforme à l'invention équipée d'un seul moyen de vulcanisation et comprenant un premier châssis 100 orienté selon un première direction horizontale XX'. Ce châssis supporte un premier poste d'assemblage 120 formé d'un bâti 122 supportant un moyen 121 de saisi et de mise en rotation autour d'un axe horizontal, aligné sur la direction XX', d'un noyau. Le noyau supporte les éléments constituant l'ébauche E d'un pneumatique. Ce premier poste d'assemblage comporte un moyen (non représenté) de pose des fils servant au renforcement de la carcasse ainsi que des moyens (non représentés) de pose des produits en caoutchouc.

Le châssis 100 supporte également un deuxième poste d'assemblage 130 formé d'un bâti 132 portant un moyen 131 de saisie et de mise en rotation du noyau. Le deuxième poste d'assemblage comporte un moyen 132 de pose des fils de renforcement du sommet ainsi que des moyens de pose des produits en caoutchouc (non représentés). Ces deux postes sont placés en vis-à-vis selon une direction XX'.

Un retourneur 110, comportant un bâti 113 circulant sur des rails 111, 112 orientés selon la direction XX', porte un préhenseur 114 permettant de saisir le noyau par sa jante. Ledit préhenseur 114 est relié au bâti 113 par un moyeu rotatif tournant autour d'un axe yy' horizontal et perpendiculaire à la direction XX'. Le retourneur se déplace d'un poste d'assemblage à l'autre selon la direction XX'. Pour saisir un noyau par la jante sur le premier poste d'assemblage il suffit de placer l'axe du préhenseur 114 en position horizontale en faisant pivoter le préhenseur autour le l'axe yy' et de saisir le noyau par la jante. Au cours du déplacement depuis le premier poste d'assemblage vers le second poste d'assemblage, on effectue une rotation de 180° autour de l'axe yy', de manière à présenter le noyau par sa face d'accrochage sur le moyen de saisie disposé sur le bâti 132 du second poste d'assemblage 130. Cette disposition permet de présenter le noyau et d'effectuer l'accrochage sur le poste d'assemblage en poursuivant le mouvement du retourneur dans la direction XX'.

Un deuxième châssis 200 adjacent au premier châssis 100 est disposé selon un axe YY' perpendiculaire à la direction XX'. Ce deuxième châssis supporte un poste de manipulation noyau 220 et un poste de refroidissement 230.

Un chariot de transfert 210, circule sur deux rails 211 et 212 et se déplace selon la direction YY' au dessus des postes de manipulation noyau et du poste de refroidissement. Les rails 211, 212 se prolongent au dessus du châssis 100 de manière à permettre au chariot 210 de venir surplomber le préhenseur 114 situé sur le retourneur 110. Le chariot de transfert 210 supporte un ou plusieurs préhenseurs 213, 214 animés d'un mouvement vertical de monte et baisse permettant de venir déposer ou retirer un noyau d'un des postes précédemment cités, et d'assurer le maintien dudit noyau pendant le transfert d'un poste à un autre.

Le poste de manipulation du noyau comporte les moyens permettant de réaliser le démantèlement des éléments du noyau afin de séparer ledit noyau du pneumatique une fois la vulcanisation achevée. Une potence 221 permet d'évacuer le pneumatique P vers un moyen de transfert et d'évacuation (non représenté). Le poste de manipulation comporte également les moyens permettant de reconstituer le noyau afin de le rendre apte à être utilisé pour la réalisation de l'ébauche de pneumatique suivant. Pour plus de détails concernant ce poste, le lecteur peut se reporter à la publication EP 0 666 165, déjà citée, pour obtenir une description des moyens utilisés en prenant soin de placer l'axe du noyau en position verticale..

On observera néanmoins que, selon l'invention, le poste de manipulation noyau est agencé de telle manière qu'il autorise la manipulation des noyaux en disposant leur axe de rotation à la verticale, ce qui est favorable à la qualité géométrique du noyau assemblé. On remarquera également que, comme il est dit ci-dessus, seule l'opération de démantèlement et de reconstitution du noyau est réalisée sur ce poste. En effet, les éléments externes du moule, à savoir les coquilles et la partie servant à mouler la bande de roulement sont fixés à demeure sur les éléments du poste de vulcanisation. Cet arrangement permet d'obtenir un temps de cycle suffisamment faible pour permettre de réaliser le traitement d'un noyau dans un temps suffisamment court et compatible avec la mise en oeuvre de deux presses de vulcanisation.

Il peut s'avérer nécessaire, lorsque la température de cuisson est élevée ou lorsque le matériau au contact du noyau est sensible à la température, qu'il soit nécessaire de refroidir ledit noyau avant d'initier la fabrication du pneumatique suivant.

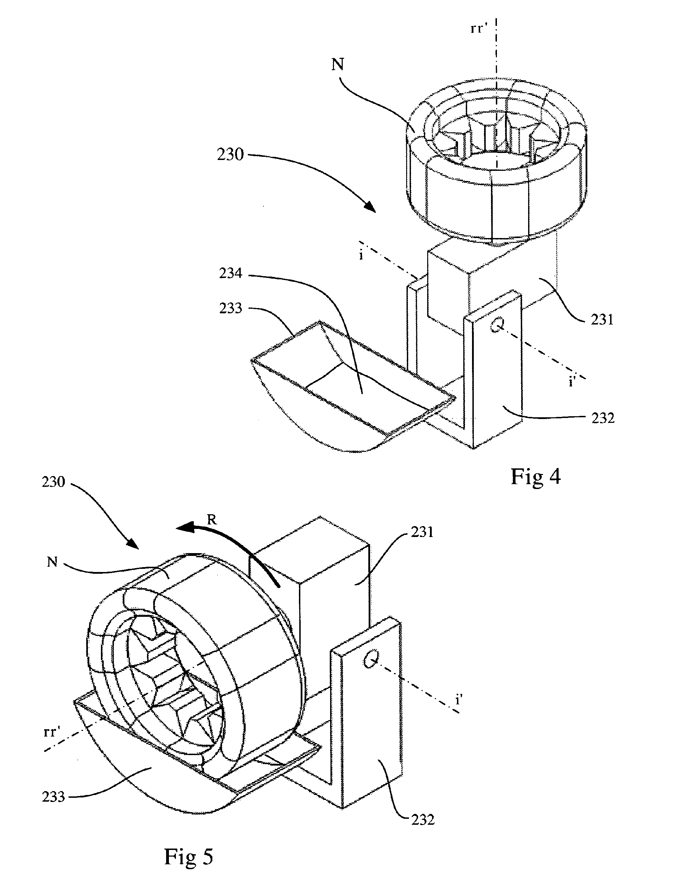

Le poste de refroidissement 230, dont le détail est donné sur les figures 4 et 5, comprend un bâti 232, supportant un moyen 231 de saisi de maintien et de mise en rotation du noyau N. Ce moyen 231 est articulé sur le bâti autour d'un axe ii' horizontal. Un bac 233 contient un volume donné d'eau réfrigérée 234. En faisant pivoter le moyen de maintien 231 autour de l'axe ii', il est possible de placer le noyau selon une première position dans laquelle l'axe de rotation rr' dudit noyau est vertical et peut donc être aligné avec l'axe d'un des préhenseurs 213, 214 du chariot de transfert 210, et selon une deuxième position dans laquelle l'axe rr' du noyau est disposé horizontalement. Dans cette deuxième position, on s'arrange pour que la surface externe du noyau soit partiellement immergée dans l'eau de réfrigération 234 contenue dans le bac 233.

Il est alors possible de mettre le noyau en rotation suivant la direction de la flèche R afin de faire en sorte que l'ensemble de la surface du noyau soit immergée à chaque rotation. La fine pellicule d'eau déposée lors de l'immersion s'évapore lorsque la surface du noyau correspondante passe à l'air libre, ce qui a pour effet d'accélérer le transfert thermique.

Le châssis 300 supporte le moyen de vulcanisation 310 composé de deux demi cuves 311 et 312. La demi cuve inférieure 311 supporte la coquille inférieure et les éléments de moule permettant de mouler la bande de roulement, et la demi cuve supérieure 312 supporte la coquille supérieure. La demi cuve supérieure 312 coulisse verticalement sur le bâti 314 de manière à laisser en position ouverte un espace suffisant permettant au chariot 210 de centrer un des préhenseurs 213, 214 au droit du moule pour permettre le dépôt d'un noyau supportant une ébauche de pneumatique ou l'extraction du noyau supportant le pneumatique vulcanisé. Après avoir dégagé le chariot 210, on referme l'espace de moulage en abaissant la demi cuve supérieure 312 au contact de la demi cuve inférieure 311. Il est également possible d'abaisser l'ensemble formé par la demi cuve supérieure et la demi cuve inférieure à l'aide d'un piston hydraulique 313 de manière à dégager le passage du chariot 210 au dessus de la demi cuve 312 lorsque l'on désire disposer un deuxième moyen de vulcanisation 310' dans le prolongement du premier moyen 310.

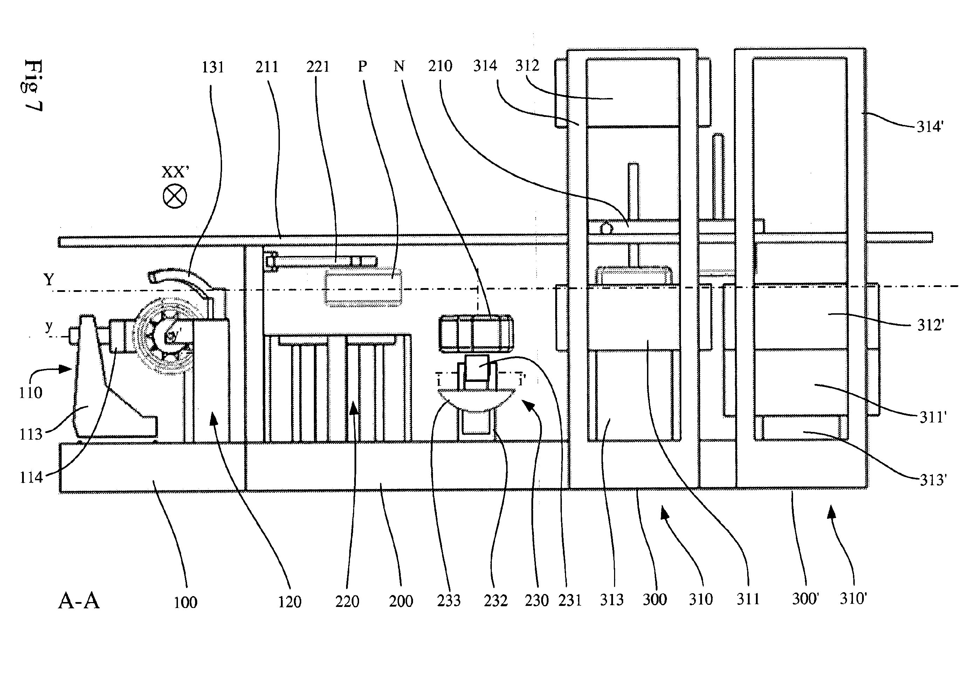

Cette configuration est illustrée sur la figure 7, dans laquelle un premier moyen de vulcanisation 310 est représenté en position ouverte, et dans laquelle le deuxième moyen de vulcanisation 310' est représenté en position fermée. Les éléments identiques du moyen de vulcanisation 310' portent la même numérotation que ceux du moyen de vulcanisation 310 affecté d'un sigle prime. On observera que les rails 211 et 212 sont prolongés dans la direction YY' pour permettre aux préhenseurs 213 et 214 du chariot de transfert de se positionner au droit du moyen de vulcanisation 310'.

La description ci-dessus fait reposer les différents postes de manière solidaire sur des châssis. Il convient de remarquer que cet arrangement particulier n'est en rien nécessaire à la mise en oeuvre de l'invention, mais peut représenter un avantage dans certaines circonstances, en particulier lorsqu'il est s'avère utile de transférer la machine d'une unité de fabrication à une autre, ou lorsque l'on souhaite rajouter un poste de vulcanisation supplémentaire.

Dans une autre alternative de réalisation il est également possible de disposer des capots de protection sur l'ensemble des faces de la machine de manière à isoler l'environnement extérieur des sources sonores provenant des différents postes de pose.

Les étapes du procédé selon l'invention se décomposent de la manière suivante :
- transférer le noyau N vers le premier poste d'assemblage 120 à l'aide du retourneur 110, tout en disposant l'axe de rotation du noyau en position horizontale,
- amener successivement sur ledit noyau, en prenant pour référence d'assemblage la surface dudit noyau, une partie des constituants du pneumatique, partie comprenant les fils constituant le renforcement de la carcasse,
- reprendre le noyau N supportant une partie de l'ébauche E du pneumatique à l'aide du retourneur 110 et transférer ledit noyau depuis le premier poste d'assemblage 120 vers le second poste d'assemblage 130, en faisant effectuer au noyau une rotation de 180° autour de l'axe yy',
- amener successivement sur le noyau N la partie restante des constituants du pneumatique, partie comprenant les fils destinés à former le renforcement du sommet, de manière à obtenir une ébauche E de pneumatique complète,
- positionner le noyau N supportant l'ébauche E de pneumatique à l'aide du retourneur 110 dans l'alignement d'un des préhenseurs 213, 214 situé sur le chariot de transfert 210, tout en disposant l'axe du noyau en position verticale par rotation autour de l'axe yy',
- transférer, à l'aide du chariot de transfert 210, le noyau supportant l'ébauche E de pneumatique vers un des postes de vulcanisation 310, 310' placé en position ouverte, et dont on aura au préalable évacué le noyau supportant le pneumatique vulcanisé précédent,
- déposer le noyau supportant l'ébauche E de pneumatique sur un des postes de vulcanisation 310, 310', refermer l'espace de moulage et procéder à la vulcanisation du pneumatique,
- après avoir ouvert l'espace de moulage, extraire le noyau supportant le pneumatique P vulcanisé du poste de vulcanisation, à l'aide du chariot de transfert 210 et transférer ledit noyau sur le poste de manipulation du noyau 220,
- démanteler le noyau pour libérer le pneumatique, et évacuer ledit pneumatique à l'aide d'une potence 221,
- reconstituer le noyau N, au poste de manipulation du noyau 220, de manière à obtenir une surface de révolution stable,
- transférer le noyau N reconstitué, depuis le poste de manipulation noyau 220 vers le retourneur 110, à l'aide du chariot de transfert 210,

Lorsqu'il s'avère nécessaire d'ajouter un poste de refroidissement l'étape de reconstitution du noyau est suivie du transfert du noyau N reconstitué vers le poste de refroidissement 230 où ledit noyau est refroidi jusqu'à obtenir la température de surface désirée. Une fois cette opération achevée, le noyau N est transféré jusqu'au retourneur 110 à l'aide du chariot de transfert 210.

Les étapes décrites ci-dessus permettent de suivre le cycle de réalisation d'un pneumatique sur un noyau. Il va de soi que la machine autorise la fabrication simultanée de plusieurs pneumatiques sur des noyaux différents. Les mouvements du retourneur et du chariot de transfert sont déterminés par les temps de cycle nécessaires à l'achèvement des opérations à réaliser sur chacun des postes. A cet effet, la mise en oeuvre des techniques connues de programmation et d'animation de machines complexes, s'avère particulièrement efficace.

## Revendications

1. Machine de fabrication de pneumatiques (P) utilisant au moins un noyau (N) composé de plusieurs éléments démantelables, et formant, dans la configuration utilisée pour l'assemblage, une surface de révolution stable d'axe de rotation rr" et présentant une forme continue, proche de la forme finale de fabrication du pneumatique, ledit noyau étant utilisé comme surface de référence pour la fabrication desdits pneumatiques (P) en se déplaçant successivement d'un poste de fabrication à un autre du début de l'assemblage jusqu'à la vulcanisation, la dite machine comprenant une première ligne de postes d'assemblage orientée selon un axe horizontal XX' et sur lesquels le noyau N se présente avec son axe de rotation rr' disposé horizontalement, et une deuxième ligne de postes, orientée selon une direction horizontale YY', perpendiculaire à la direction XX', dans laquelle lesdits postes sont aptes à recevoir le noyau (N) dont l'axe de rotation rr' est orienté verticalement **caractérisée en ce que**
- la première ligne de postes, comprend un premier (120) et un deuxième (130) poste d'assemblage du pneumatique comportant des moyens (121, 131) pour saisir et entraîner en rotation le noyau (N) autour de l'axe rr' confondu avec l'axe horizontal XX', lesdits moyens étant placés en vis à vis,
- un retourneur (110) mobile dans la direction XX', et apte à transférer ledit noyau d'un poste à un autre au sein de la première ligne de postes (120, 130) en faisant effectuer à l'axe rr' du noyau une translation selon l'axe XX' et une rotation de 180° autour d'un axe horizontal yy' parallèle à la direction YY'.

2. Machine selon la revendication 1, dans laquelle la première ligne de poste (120, 130) comprend des moyens d'assemblage pour déposer les différents composants formant l'ébauche du pneumatique dans l'ordre et à la place requise par l'architecture du pneumatique.

3. Machine selon la revendication 2, dans laquelle le premier poste d'assemblage (120) comprend un moyen pour déposer les fils constituant le renforcement de la carcasse.

4. Machine selon la revendication 2, dans laquelle le deuxième poste d'assemblage (130) comporte un moyen (132) pour déposer les fils constituant le renforcement du sommet.

5. Machine selon l'une des revendications 1 à 4, dans laquelle la deuxième ligne de poste comprend :
- un poste de manipulation du noyau (220),
- un ou plusieurs postes de vulcanisation (310, 310'),
- un chariot de transfert (210) permettant, par translation selon la direction YY', de déplacer un noyau, entre le retourneur (110), le poste de manipulation du noyau (220), et le ou les postes de vulcanisation (310, 310'), en maintenant l'axe de rotation du noyau en position verticale à l'aide d'au moins un préhenseur (213, 214) apte à saisir le noyau par sa partie centrale en maintenant l'axe rr' dudit noyau en position verticale.

6. Machine selon la revendication 5, dans laquelle le chariot de transfert (210) se déplace verticalement au dessus du retoumeur (110), du poste de manipulation noyau (220), et des postes de vulcanisation (310, 310').

7. Machine selon la revendication 6, dans laquelle le retourneur (110) et le chariot de transfert (210) sont aptes à se positionner l'un vis-à-vis de l'autre de manière à ce que le noyau (N) puisse être saisi par un préhenseur (213, 214) situé sur le chariot de transfert (210) ou puisse être déposé par un préhenseur (213, 214) du chariot de transfert (110) sur le préhenseur (114) du retourneur (110), l'axe de rotation rr' dudit noyau étant placé en position verticale.

8. Machine selon la revendication 7, dans laquelle les préhenseurs (213, 214) portés par le chariot de transfert (210) sont aptes à effectuer des mouvements de translation dans la direction verticale permettant de déposer le noyau sur le préhenseur (114) du retoumeur (110), du poste de manipulation noyau (220) et du poste de vulcanisation (310, 310').

9. Machine selon l'une des revendications 5 à 8, dans laquelle le chariot de transfert (210) comprend deux préhenseurs (213, 214) alignés selon la direction YY'.

10. Machine selon l'une des revendications 5 à 9, comportant un poste de refroidissement (230) disposé dans l'alignement des postes de vulcanisation (310, 310') et du poste de manipulation du noyau (220) et accessible par les préhenseurs (213, 214) portés par le chariot de transfert (210).

11. Machine selon l'une des revendications 5 à 10, dans laquelle le poste de manipulation du noyau (220) comprend des moyens permettant de démanteler des éléments du noyau pour libérer le pneumatique après vulcanisation, et des moyens permettant de reconstituer les éléments du noyau avant son utilisation pour former l'ébauche (E) de pneumatique suivante, et dans lequel lesdits moyens sont configurés pour maintenir l'axe de rotation du noyau selon une direction sensiblement verticale.

12. Machine selon l'une des revendications 5 à 11, comportant une potence d'évacuation (221) du pneumatique (P) apte à saisir le pneumatique après que ce dernier ait été séparé du noyau (N), et de transférer ledit pneumatique (P) vers un moyen d'évacuation.

13. Machine selon l'une des revendications 5 à 12, dans laquelle le poste de vulcanisation (310, 310') supporte la partie extérieure du moule comprenant deux coquilles pour le moulage des flancs et de la zone basse, et la partie du moule destinée au moulage de la bande de roulement.

14. Machine selon l'une des revendications 5 à 13, comprenant deux postes de vulcanisation (310, 310').

15. Machine selon l'une des revendications 1 à 14, dans laquelle le retourneur (110), le premier (120) et le deuxième (130) poste d'assemblage sont montés sur un châssis commun (100).

16. Machine selon l'une des revendications 5 à 15, dans laquelle le poste de manipulation du noyau (220) et le poste de refroidissement (230) sont montés sur un châssis commun (200).

17. Machine selon l'une des revendications 5 à 16, dans laquelle chacun des postes de vulcanisation (310, 310') est monté sur un châssis indépendant (300, 300').

18. Procédé de fabrication de pneumatique comportant une étape d'assemblage, une étape de moulage et de vulcanisation, suivie d'une étape de démoulage, l'étape de vulcanisation utilisant un moule imposant au pneumatique au moins en partie sa forme de fabrication, ledit moule étant constitué de plusieurs éléments séparables les uns des autres, au moins un desdits éléments formant un noyau (N) démantelable, formant en fonctionnement lors de l'assemblage, une surface de révolution stable, ledit noyau étant utilisé pour ladite fabrication depuis l'assemblage jusqu'à la vulcanisation, procédé comprenant les étapes suivantes :
- transférer ledit noyau (N), à l'aide d'un retourneur (110) apte à se translater selon une direction horizontale XX', vers un premier poste d'assemblage (120), tout en disposant l'axe de rotation rr' du noyau en position horizontale parallèlement à la direction XX',
- amener successivement sur ledit noyau (N), en prenant pour référence d'assemblage la surface dudit noyau, une partie des constituants du pneumatique, partie comprenant les fils constituant le renforcement de la carcasse,
- reprendre le noyau supportant une partie de l'ébauche (E) du pneumatique à l'aide du retoumeur (110), et transférer ledit noyau depuis le premier poste d'assemblage (120) vers un second poste d'assemblage (130) placé en vis-à-vis du premier poste d'assemblage, en faisant effectuer au noyau une rotation de 180° autour d'un axe yy', horizontal et sensiblement perpendiculaire à la direction XX',
- amener successivement sur le noyau la partie restante des constituants du pneumatique, partie comprenant les fils destinés à former le renforcement du sommet,
- positionner le noyau supportant l'ébauche (E) de pneumatique à l'aide du retourneur (110) dans l'alignement d'un des préhenseurs (213, 214) situés sur un chariot de transfert (210), tout en disposant l'axe du noyau en position verticale par une rotation de 90° autour de l'axe yy',
- transférer, à l'aide du chariot de transfert (210), le noyau (N) supportant l'ébauche (E) de pneumatique vers un des postes de vulcanisation (310, 310'),
- déposer le noyau supportant l'ébauche (E) de pneumatique sur un des postes de vulcanisation (310, 310'), refermer l'espace de moulage et procéder à la vulcanisation du pneumatique,
- après avoir ouvert l'espace de moulage, extraire le noyau supportant le pneumatique vulcanisé (P) du poste de vulcanisation (310, 310') à l'aide d'un des préhenseurs (213, 214) du chariot de transfert (210), et amener le noyau et le pneumatique vulcanisé (P) sur un poste de manipulation du noyau (220),
- démanteler le noyau pour libérer le pneumatique (P) et évacuer ledit pneumatique (P) à l'aide d'une potence (221),
- reconstituer le noyau, (N) au poste de manipulation du noyau (220), de manière à obtenir une surface de révolution stable,
- transférer le noyau (N) reconstitué depuis le poste de manipulation noyau (220) vers le retourneur (110) à l'aide du chariot de transfert (210),

19. Procédé de fabrication selon la revendication 18, dans lequel on fait varier le nombre de poste de vulcanisation (310, 310') en fonction du temps de cycle nécessaire à l'assemblage.

20. Procédé de fabrication selon la revendication 18, dans lequel on fait opérer plusieurs noyaux (N) simultanément sur la même machine.

21. Procédé selon la revendication 18, dans lequel l'étape de reconstitution du noyau (N) est suivie d'une étape de refroidissement dans laquelle :
- le noyau reconstitué (N) est transféré vers un poste de refroidissent (230) à l'aide du chariot de transfert (210),
- le noyau est refroidit jusqu' à obtenir la température de surface désirée,
- le noyau est transféré vers le retourneur (110) à l'aide du chariot de transfert (210).

## Claims

1. Machine for manufacturing tyres (P) using at least one core (N) composed of plural elements capable of being dismantled, and forming in the configuration used for assembly a stable surface of revolution with axis of rotation rr' and having a continuous form, close to the final manufactured form of the tyre, the core being used as a reference surface of the manufacture of the tyres (P) by moving consecutively from one manufacturing station to another from the start of assembly through to vulcanisation; comprising a first line of stations, oriented in a horizontal direction XX', in which the stations are capable of receiving a core (N) whose axis of rotation rr' is oriented horizontally and a second line of stations, oriented in a horizontal direction YY', perpendicular to the direction XX', in which the stations are capable of receiving a core (N) whose axis is oriented vertically **characterised in that**:
- the first line of stations comprises a first (120) and a second (130) station for assembling the tyre comprising means (121, 131) of grasping and driving the core (N) in rotation about a horizontal axis rr', merged with the axis XX', the means being placed opposite one another,
- a turning device (110), movable in the direction XX', and capable of transferring the core from one station to another within the first line of stations (120, 130), by making the axis rr' of the core effect a translation along the axis XX' and a rotation of 180° about a horizontal axis yy' parallel to the direction YY'.

2. Machine according to claim 1, wherein the first line of stations (120, 130) comprises means of depositing the various components forming the tyre blank in the order and place required by the structure of the tyre.

3. Machine according to claim 2, wherein the first assembly station (120) comprises means for depositing the cords forming the carcass reinforcement.

4. Machine according to claim 2, wherein the second assembly station (130) comprises means (132) for depositing the cords forming the crown reinforcement.

5. Machine according to one to claims 1 to 4, wherein the second line of stations comprises:
- a station for handling the core (220),
- one or more vulcanisation stations (310, 310'),
- a transfer carriage (210) for moving the core by translation in the direction YY' between the turning device (110), the core-handling station (220) and the vulcanisation station(s) (310, 310'), by keeping the axis of rotation of the core in a vertical position by means of at least one gripper (213, 214) capable of grasping the core by its central portion and keeping the axis rr' of the core in a vertical position.

6. Machine according to claim 5, wherein the transfer carriage (210) moves vertically over the turning device (110), the core-handling station (220), and the vulcanisation stations (310, 310').

7. Machine according to claim 6, wherein the turning device (110) and the transfer carriage (210) are capable of being positioned opposite one another so that the core (N) can be grasped by a gripper (213, 214) located on the transfer carriage (210) or can be deposited by a gripper (213, 214) of the transfer carriage (110) on to the gripper (114) of the turning device (110,) the axis of rotation rr' of the core being placed in a vertical position,.

8. Machine according to claim 7, wherein the grippers (213, 214) carried by the transfer carriage (210) are capable of carrying out translational movements in the vertical direction, allowing the core to be deposited on to the gripper (114) of the turning device (110), of the core-handling station (220) and of the vulcanisation station (310, 310').

9. Machine according to one of claims 5 to 8, wherein the transfer carriage (210) comprises two grippers (213, 214) aligned in the direction YY'.

10. Machine according to one of claims 5 to 9, comprising a cooling station (230) disposed in alignment with the vulcanisation stations (310, 310') and the core-handling station (220) and being accessible by the grippers (213, 214) carried by the transfer carriage (210).

11. Machine according to one of claims 5 to 10, wherein the core-handling station (220) comprises means for dismantling the elements of the core in order to free the tyre after vulcanisation, and means for re-assembling the elements of the core before it is used to form the blank (E) of the next tyre, and wherein the means are configured to keep the axis of rotation of the core in a substantially vertical direction.

12. Machine according to one of claims 5 to 11, comprising an evacuation bracket (221) for the tyre (P), capable of grasping the tyre after this has been separated from the core (N), and of transferring the tyre (P) to an evacuation means.

13. Machine according to one of claims 5 to 12, wherein the vulcanisation station (310, 310') supports the external part of the mould comprising two shells for moulding the sides and the lower region, and the part of the mould intended for moulding the tread.

14. Machine according to one of claims 5 to 13, comprising two vulcanisation stations (310,310').

15. Machine according to one of claims 1 to 14, wherein the turning device (110), the first (120) and the second (130) assembly station are mounted on a common chassis (100).

16. Machine according to one of claims 5 to 15, wherein the core-handling station (220) and the cooling station (230) are mounted on a common chassis (200).

17. Machine according to one to claims 5 to 16, wherein each of the vulcanisation stations (310, 310') is mounted on an independent chassis (300, 300').

18. Process of manufacture of a tyre, comprising an assembly stage, a moulding and vulcanisation stage, followed by a stage of ejection from the mould, the vulcanisation stage using a mould which imposes on the tyre its manufactured shape at least in part, the mould being formed of plural mutually separable elements, at least one of the elements forming a core (N) capable of being dismantled, forming during operation during assembly a stable surface of revolution, the core being used for the manufacture from assembly through to vulcanisation, the process comprising the following stages:
- transfer the core (N) to the first assembly station (120) by means of a turning device (110) capable of translating in a horizontal direction XX', whilst disposing the axis rr' of rotation of the core in a horizontal position, parallel to the direction XX',
- apply consecutively to the core (N), by taking as an assembly reference the surface of the core, part of the components of the tyre, being the part comprising the cords forming the carcass reinforcement,
- pick up again the core (N) supporting part of the blank (E) of the tyre by means of the turning device (110) and transfer the core from the first assembly station (120) to the second assembly station (130), by making the core perform a rotation of 180° about the axis yy', which is horizontal and substantially perpendicular to the direction XX',
- apply consecutively to the core the remaining part of the components of the tyre, being the part comprising the cords intended to form the crown reinforcement,
- position the core supporting the tyre blank (E) by means of the turning device (110) in alignment with one of the grippers (213, 214) located on a transfer carriage (210), whilst disposing the axis of the core in a vertical position by a rotation of 90° about the axis yy',
- transfer the core (N) supporting the tyre blank (E) by means of the transfer carriage (210) to one of the vulcanisation stations (310, 310'),
- deposit the core supporting the tyre blank (E) in one of the vulcanisation stations (310, 310'), close the moulding space and proceed to vulcanisation of the tyre,
- after opening the moulding space, remove the core supporting the vulcanised tyre (P) from the vulcanisation station (310, 310') by means of one of the grippers (213, 214) of the transfer carriage (210) and transfer the core and the vulcanised tyre (P) to a core-handling station (220),
- dismantle the core in order to free the tyre (P) and evacuate the tyre (P) by means of a bracket (221),
- re-assemble the core (N) at the core-handling station (220) so as to obtain a stable surface of revolution,
- transfer the re-assembled core (N) from the core-handling station (220) to the turning device (110) by means of the transfer carriage (210).

19. Process of manufacture according to claim 18, wherein the number of vulcanisation stations (310, 310') is varied according to the cycle time necessary for assembly.

20. Process of manufacture according to claim 18, wherein plural cores (N) are treated simultaneously in the same machine.

21. Process of manufacture according to claim 18, wherein the stage of re-assembly of the core (N) is followed by a cooling stage in which:
- the re-assembled core (N) is transferred to a cooling station (230) by means of the transfer carriage (210),
- the core is cooled until the desired surface temperature is reached,
- the core is transferred to the turning device (110) by means of the transfer carriage (210).

## Patentansprüche

1. Maschine zur Herstellung von Luftreifen (P), die mindestens einen Kern (N) verwendet, der aus mehreren zerlegbaren Elementen besteht und in der für den Zusammenbau verwendeten Konfiguration eine stabile drehsymmetrische Fläche mit einer Drehachse rr" formt, die eine kontinuierliche Form nahe der endgültigen Herstellungsform des Luftreifens hat, wobei der Kern als Bezugsfläche für die Herstellung der Luftreifen (P) verwendet wird, indem er sich nacheinander von einer Herstellungsstation zu einer anderen vom Anfang des Zusammenbaus bis zur Vulkanisierung bewegt, wobei die Maschine eine erste Reihe von Zusammenbaustationen, die gemäß einer waagrechten Achse XX' ausgerichtet ist, und auf denen der Kern N sich mit seiner Drehachse rr' waagrecht ausgerichtet präsentiert, und eine zweite Reihe von Stationen aufweist, die in einer waagrechten Richtung YY' lotrecht zur Richtung XX' ausgerichtet ist, in der die Stationen in der Lage sind, den Kern (N) aufzunehmen, dessen Drehachse rr' senkrecht ausgerichtet ist, **dadurch gekennzeichnet, dass**
- die erste Reihe von Stationen eine erste (120) und eine zweite (130) Luftreifen-Zusammenbaustation aufweist, die Einrichtungen (121, 131) aufweisen, um den Kern (N) zu ergreifen und um die Achse rr' in Drehung zu versetzen, die mit der waagrechten Achse XX' zusammenfällt, wobei die Einrichtungen einander gegenüber angeordnet sind,
- ein Wender (110) in der Richtung XX' beweglich und in der Lage ist, den Kern innerhalb der ersten Reihe von Stationen (120, 130) von einer Station zur einer anderen zu transportieren, indem er die Achse rr' des Kerns eine Translationsbewegung gemäß der Achse XX' und eine Drehung um 180° um eine waagrechte Achse yy' parallel zur Richtung durchführen lässt.

2. Maschine nach Anspruch 1, bei der die erste Stationsreihe (120, 130) Zusammenbaueinrichtungen aufweist, um die verschiedenen den Rohling des Luftreifens bildenden Bauteile in der Reihenfolge und am von der Architektur des Luftreifens bedingten Platz aufzubringen.

3. Maschine nach Anspruch 2, bei der die erste Zusammenbaustation (120) eine Einrichtung aufweist, um die die Verstärkung der Karkasse bildenden Drähte aufzubringen.

4. Maschine nach Anspruch 2, bei die zweite Zusammenbaustation (130) eine Einrichtung (132) aufweist, um die die Verstärkung des Scheitels bildenden Drähte aufzubringen.

5. Maschine nach einem der Ansprüche 1 bis 4, bei der die zweite Stationsreihe aufweist:
- eine Handhabungsstation des Kerns (220),
- eine oder mehrere Vulkanisierungsstationen (310, 310'),
- einen Transportschlitten (210), der es ermöglicht, durch Translationsverschiebung in der Richtung YY' den Kern zwischen dem Wender (110), der Handhabungsstation des Kerns (220) und der oder den Vulkanisierungsstationen (310, 310') zu verschieben, indem die Drehachse des Kerns mit Hilfe mindestens eines Greifers (213, 214) in senkrechter Stellung gehalten wird, der in der Lage ist, den Kern in seinem zentralen Bereich zu ergreifen, indem er die Achse rr' in senkrechter Stellung hält.

6. Maschine nach Anspruch 5, bei der der Transportschlitten (210) sich senkrecht oberhalb des Wenders (110), der Kern-Handhabungsstation (220) und der Vulkanisierungsstationen (310, 310') verschiebt.

7. Maschine nach Anspruch 6, bei der der Wender (110) und der Transportschlitten (210) in der Lage sind, sich einander gegenüber zu positionieren, damit der Kern (N) von einem Greifer (213, 214) ergriffen werden kann, der sich auf dem Transportschlitten (210) befindet, oder von einem Greifer (213, 214) des Transportschlittens (210) auf den Greifer (114) des Wenders (110) aufgebracht werden kann, wobei die Drehachse rr' des Kerns in senkrechter Stellung angeordnet ist.

8. Maschine nach Anspruch 7, bei der die vom Transportschlitten (210) getragenen Greifer (213, 214) in der Lage sind, Translationsbewegungen in der senkrechten Richtung durchzuführen, die es ermöglichen, den Kern auf den Greifer (114) des Wenders (110), der Kern-Handhabungsstation (220) und der Vulkanisierungsstation (310, 310') aufzubringen.

9. Maschine nach einem der Ansprüche 5 bis 8, bei der der Transportschlitten (210) zwei Greifer (213, 214) aufweist, die in der Richtung YY' fluchtend angeordnet sind.

10. Maschine nach einem der Ansprüche 5 bis 9, die eine Abkühlstation (230) aufweist, die in Flucht mit den Vulkanisierungsstationen (310, 310') und der Handhabungsstation des Kerns (220) angeordnet und für die Greifer (213, 214) zugänglich ist, die vom Transportschlitten (210) getragen werden.

11. Maschine nach einem der Ansprüche 5 bis 10, bei der die Handhabungsstation des Kerns (220) Einrichtungen, die es ermöglichen, Elemente des Kerns zu zerlegen, um den Luftreifen nach der Vulkanisierung freizugeben, und Einrichtungen aufweist, die es ermöglichen, die Elemente des Kerns vor seiner Verwendung zum Formen des folgenden Luftreifenrohlings (E) wiederherzustellen, und bei der die Einrichtungen konfiguriert sind, um die Drehachse des Kerns in einer im Wesentlichen senkrechten Richtung zu halten.

12. Maschine nach einem der Ansprüche 5 bis 11, die einen Abtransport-Ausleger (221) für den Luftreifen (P) aufweist, der in der Lage ist, den Luftreifen zu ergreifen, nachdem dieser vom Kern (N) getrennt wurde, und den Luftreifen (P) zu einer Abtransporteinrichtung zu transportieren.

13. Maschine nach einem der Ansprüche 5 bis 12, bei der die Vulkanisierungsstation (310, 310') den äußeren Teil des Formwerkzeugs, der zwei Kokillen für das Formen der Flanken und der unteren Zone aufweist, und den Teil des Formwerkzeugs trägt, der zum Formen der Lauffläche bestimmt ist.

14. Maschine nach einem der Ansprüche 5 bis 13, die zwei Vulkanisierungsstationen (310, 310') aufweist.

15. Maschine nach einem der Ansprüche 1 bis 14, bei der der Wender (110), die erste (120) und die zweite (130) Zusammenbaustation auf ein gemeinsames Gestell (100) montiert sind.

16. Maschine nach einem der Ansprüche 5 bis 15, bei der die Handhabungsstation des Kerns (220) und die Abkühlstation (230) auf ein gemeinsames Gestell (200) montiert sind.

17. Maschine nach einem der Ansprüche 5 bis 16, bei der jede der Vulkanisierungsstationen (310, 310') auf ein unabhängiges Gestell (300, 300') montiert ist.

18. Verfahren zur Herstellung eines Luftreifens, das einen Zusammenbauschritt, einen Formgebungs- und Vulkanisierungsschritt, gefolgt von einem Ausformungsschritt aufweist, wobei der Vulkanisierungsschritt ein Formwerkzeug verwendet, das dem Luftreifen zumindest zum Teil seine Herstellungsform aufzwingt, wobei das Formwerkzeug aus mehreren voneinander trennbaren Elementen besteht, wobei mindestens eines der Elemente einen zerlegbaren Kern (N) bildet, der im Betrieb beim Zusammenbau eine stabile drehsymmetrische Flache bildet, wobei der Kern für die Herstellung vom Zusammenbau bis zur Vulkanisierung verwendet wird, wobei das Verfahren die folgenden Schritte aufweist:
- Transportieren des Kerns (N) mit Hilfe eines Wenders (110), der sich in einer waagrechten Richtung XX' translationsverschieben kann, zu einer ersten Zusammenbaustation (120), wobei die Drehachse rr' des Kerns in der waagrechten Stellung parallel zur Richtung XX' angeordnet wird,
- aufeinanderfolgendes Zuführen auf den Kern (N), indem als Zusammenbaubezug die Oberfläche des Kerns genommen wird, eines Teils der Bestandteile des Luftreifens, des Teils, der die die Verstärkung der Karkasse bildende Drähte aufweist,
- Wiederaufnehmen des einen Teil des Rohlings (E) des Luftreifens tragenden Kerns mit Hilfe des Wenders (110) und Transport des Kerns von der ersten Zusammenbaustation (120) zu einer zweiten Zusammenbaustation (130), die sich gegenüber der ersten Zusammenbaustation befindet, indem der Kern um 180° um eine waagrechte und im Wesentlichen zur Richtung XX' lotrechte Achse yy' gedreht wird,
- aufeinanderfolgendes Zuführen auf den Kern des restlichen Teils der Bestandteile des Luftreifens, des Teils, der die Drähte aufweist, die dazu bestimmt sind, die Verstärkung des Scheitels zu bilden,
- Positionieren des den Luftreifenrohling (E) tragenden Kerns mit Hilfe des Wenders (110) in Flucht mit einem der Greifer (213, 214), die sich auf einem Transportschlitten (210) befinden, wobei die Achse des Kerns durch eine Drehung um 90° die Achse yy' in der senkrechten Stellung angeordnet wird,
- Transport mit Hilfe des Transportschlittens (210) des den Luftreifenrohling (E) tragenden Kerns (N) zu einer der Vulkanisierungsstationen (310, 310'),
- Aufbringen des den Luftreifenrohling (E) tragenden Kerns auf eine der Vulkanisierungsstationen (310, 310'), Verschließen des Formraums und Durchführen der Vulkanisierung des Luftreifens,
- nach dem Öffnen des Formraums, Entnahme des den vulkanisierten Luftreifen (P) tragenden Kerns aus der Vulkanisierungsstation (310, 310') mit Hilfe eines der Greifer (213, 214) des Transportschlittens (210) und Transport des Kerns und des vulkanisierten Luftreifens (P) zu einer Handhabungsstation (220) des Kerns,
- Zerlegen des Kerns, um den Luftreifen (P) freizugeben, und Abtransport des Luftreifens (P) mit Hilfe eines Auslegers (221),
- Wiederherstellen des Kerns (N) in der Handhabungsstation (220) des Kerns, um eine stabile drehsymmetrische Fläche zu erhalten,
- Transport des wiederhergestellten Kerns (N) von der Kern-Handhabungsstation (220) zum Wender (110) mit Hilfe des Transportschlittens (210).

19. Herstellungsverfahren nach Anspruch 18, bei dem man die Anzahl von Vulkanisierungsstationen (310, 310') in Abhängigkeit von der für den Zusammenbau notwendigen Zykluszeit variieren lässt.

20. Herstellungsverfahren nach Anspruch 18, bei dem man mehrere Kerne (N) gleichzeitig in der gleichen Maschine arbeiten lässt.

21. Verfahren nach Anspruch 18, bei dem auf den Schritt der Wiederherstellung des Kerns (N) ein Schritt der Abkühlung folgt, in dem:
- der wiederhergestellte Kern (N) mit Hilfe des Transportschlittens (210) zu einer Abkühlstation (230) transportiert wird,
- der Kern abgekühlt wird, bis die gewünschte Oberflächentemperatur erhalten wird,
- der Kern mit Hilfe des Transportschlittens (210) zum Wender (110) transportiert wird.
